# EUROPEAN PATENT APPLICATION

(11) **EP 4 776 649 A1**
(43) Date of publication of application: **15.07.2026**
(21) Application number: 25213462.2
(22) Date of filing: 04.11.2025
(51) Int. Cl.: H04R 1/02, F16B 21/04

(54) **SPEAKER STRUCTURE WITH QUICK ASSEMBLY AND DISASSEMBLY MECHANISM, AND FRONT COVER ASSEMBLY AND GRILLE COVER OF THE SAME**

(30) Priority: 13.01.2025 TW 114101309
(71) Applicant: LONGINESTENO TECHNOLOGY COMPLEX CORPORATION, New Taipei City 25170 (TW)
(72) Inventor: Wang, Chao-Lang, New Taipei City (TW); Wang, Chien-Cheng, New Taipei City (TW)
(74) Representative: Bandpay & Greuter

(57) **Abstract**

A speaker structure with a quick assembly/disassembly mechanism, and front cover assembly and grille cover thereof include at least one assembly post having a fixing section, an adaptive section, and an engaging section. The latter two have different widths at their junction, forming a shoulder portion. Mountable to a front cover, the grille cover has at least one mounting groove whose groove wall protrudes with at least one position-limiting wall dividing a wide groove area from a narrow one. With the post inserted into the former area until the adaptive section corresponds to the latter area, when forwardly rotating the grille cover, said section moves into the latter area, and the shoulder portion abuts the position-limiting wall's rear side; when rotating reversely, said section moves into the former area, separating the shoulder portion from said rear side. By rotating the grille cover, a user can quickly complete the assembly/disassembly process.

## Description

### FIELD

The present disclosure relates to a fixing structure for a grille cover, and more particularly to a fixing structure in which a grille cover is provided with at least one assembly post that allows quick assembly and disassembly, so that a user needs only to rotate the grille cover to fix the assembly post(s) to or disengage the assembly post(s) from a corresponding front cover or speaker enclosure.

### BACKGROUND

Currently, the grille cover of a commercially available in-ceiling loudspeaker has two major fixing methods. The first fixing method is to adopt a snap-fit structure that works essentially on the resilience of a metal grille cover. More specifically, a metal grille cover is elastically deformed in order to be fixedly coupled to the corresponding speaker enclosure. When this fixing method is employed, however, the assembly/disassembly process generally requires the user to operate a dedicated tool, or the grille cover cannot be successfully mounted or removed. That is to say, the fixing method leads to inconvenience of use. The trouble caused to the user increases especially in use scenarios where frequent assembly and disassembly are needed.

The second fixing method entails a magnetic structure and is often applied to a full-face grille cover that covers a relatively large area. The working principle of the second fixing method consists in magnetic attraction, through which a grille cover is fixed to the corresponding speaker enclosure. The magnetic structure allows the mounting and removing processes of a grille cover to be completed in a tool-free manner and hence more easily than when the foregoing snap-fit structure is used. However, the magnetic structure has challenges in design. For example, the attractive force of the magnets to be used must match the weight and area of the grille cover to be fixed. An improper design may cause a grille cover to fall off due to an insufficient attractive force or may make it difficult to remove a grille cover because of an exceedingly large attractive force.

In summary of the above, the conventional snap-fit structure requires an additional dedicated tool to be at hand when performing the assembly/disassembly process, and the assembly/disassembly cannot be completed without a certain amount of experience. The magnetic structure, on the other hand, involves a design process in which calculations in mechanics must be precise in order to achieve the ideal stability and user experience. Accordingly, one of the issues to be addressed in the present disclosure is to design a fixing structure that is structurally simple and easy to manufacture, and allows for easy assembly and disassembly.

### SUMMARY

To stand out in a competitive market, based on the research spirit striving for excellence, and as a result of longtime research and experiments, a speaker structure with a quick assembly/disassembly mechanism, and a front cover assembly and a grille cover of the same are provided in the present disclosure, so as to win the favor of the market.

Certain aspects of the present disclosure are directed to a speaker structure having a quick assembly and disassembly mechanism. The speaker structure includes a speaker enclosure and a grille cover. The speaker enclosure has at least one mounting groove at the front side thereof. A portion of the groove wall of the at least one mounting groove is protrudingly provided with at least one position-limiting wall dividing the at least one mounting groove into a wide groove area and a narrow groove area. The wide groove area and the narrow groove area are connected to each other along a first axial direction, and the width of the wide groove area in a second axial direction is greater than the width of the narrow groove area in the second axial direction. The grille cover is mountable on the front side of the speaker enclosure and provided with at least one assembly post at the rear side of the grille cover. Each of the at least one assembly post is divided into a fixing section, an adaptive section, and an engaging section. A first end of the fixing section is connectable to the rear side of the grille cover, a second end of the fixing section is connected to a first end of the adaptive section, and a second end of the adaptive section is connected to a first end of the engaging section. The engaging section and the adaptive section have different widths at the junction between the engaging section and the adaptive section so that at least one shoulder portion is formed at the engaging section. The greatest width of the at least one shoulder portion in the second axial direction is less than or equal to the width of the wide groove area of a corresponding one of the at least one mounting groove in the second axial direction, and is greater than the width of the narrow groove area of the corresponding one of the at least one mounting groove in the second axial direction. The width of the adaptive section in the second axial direction is less than or equal to the width of the narrow groove area of the corresponding one of the at least one mounting groove in the second axial direction so that the adaptive section is movable in the narrow groove area. When the grille cover is mounted on the speaker enclosure, the engaging section is inserted into the wide groove area of the corresponding one of the at least one mounting groove and moved past the projection area along the first axial direction of the at least one position-limiting wall of the corresponding one of the at least one mounting groove until the adaptive section corresponds to the narrow groove area of the corresponding one of the at least one mounting groove. When the grille cover is rotated in a first rotation direction, the adaptive section is moved from the wide groove area into the narrow groove area of the corresponding one of the at least one mounting groove, and the at least one shoulder portion abuts the rear side of the at least one position-limiting wall. When the grille cover is rotated in a second rotation direction, the adaptive section is moved from the narrow groove area into the wide groove area of the corresponding one of the at least one mounting groove, and the at least one shoulder portion is separated from the rear side of the at least one position-limiting wall. Accordingly, a user needs only rotate (in a first rotation direction) the grille cover, the assembly post will be moved from the wide groove area into the narrow groove area and be blocked by the position-limiting wall so as to be mounted stably to the speaker enclosure. Afterwards, the user needs only rotate reversely (in a second rotation direction) the grille cover, the assembly post will be moved from the narrow groove area into the wide groove area and be disengaged from the blockage by the position-limiting wall so as to be dissembled from the speaker enclosure.

In certain embodiments, the speaker structure further includes at least one speaker driver, the front side of the speaker enclosure is formed with at least one mounting hole, and the at least one speaker driver is mountable in the at least one mounting hole.

In certain embodiments, the at least one position-limiting wall is divided into an entrance section, an intermediate section, and a sliding section, a first end of the entrance section is adjacent to the wide groove area of the corresponding one of the at least one mounting groove, a second end of the entrance section is connected to a first end of the intermediate section, and a second end of the intermediate section is connected to a first end of the sliding section; and the greatest thickness of the intermediate section is greater than the thickness of the sliding section.

In certain embodiments, the thickness of the sliding section is gradually reduced from the first end thereof toward a second end thereof.

In certain embodiments, the greatest thickness of the intermediate section is greater than the thickness of the entrance section.

In certain embodiments, the speaker enclosure includes a front cover and a rear housing. The front cover is provided with the at least one mounting groove at the front side of the front cover. The rear housing is mountable to the front cover, and a reflective chamber is formed in at least one of the front cover and the rear housing or between the front cover and the rear housing.

Certain aspects of the present disclosure are directed to a front cover assembly having a quick assembly and disassembly mechanism. The front cover assembly includes a front cover and a grille cover. The front cover is mountable to a rear housing to form a speaker enclosure, the front side of the front cover is provided with at least one mounting groove, a portion of the groove wall of the at least one mounting groove is protrudingly provided with at least one position-limiting wall dividing the at least one mounting groove into a wide groove area and a narrow groove area, the wide groove area and the narrow groove area are connected to each other along a first axial direction, and the width of the wide groove area in a second axial direction is greater than the width of the narrow groove area in the second axial direction. The grille cover is mountable on the front side of the front cover and provided with at least one assembly post at the rear side of the grille cover, each of the at least one assembly post is divided into a fixing section, an adaptive section, and an engaging section, a first end of the fixing section is connectable to the rear side of the grille cover, a second end of the fixing section is connected to a first end of the adaptive section, and a second end of the adaptive section is connected to a first end of the engaging section. The engaging section and the adaptive section have different widths at the junction between the engaging section and the adaptive section so that at least one shoulder portion is formed at the engaging section. The greatest width of the at least one shoulder portion in the second axial direction is less than or equal to the width of the wide groove area of a corresponding one of the at least one mounting groove in the second axial direction, and is greater than the width of the narrow groove area of the corresponding one of the at least one mounting groove in the second axial direction. The width of the adaptive section in the second axial direction is less than or equal to the width of the narrow groove area of the corresponding one of the at least one mounting groove in the second axial direction so that the adaptive section is movable in the narrow groove area. When the grille cover is mounted on the front cover, the engaging section is inserted into the wide groove area of the corresponding one of the at least one mounting groove and moved past the projection area along the first axial direction of the at least one position-limiting wall of the corresponding one of the at least one mounting groove until the adaptive section corresponds to the narrow groove area of the corresponding one of the at least one mounting groove. When the grille cover is rotated in a first rotation direction, the adaptive section is moved from the wide groove area into the narrow groove area of the corresponding one of the at least one mounting groove, and the at least one shoulder portion abuts the rear side of the at least one position-limiting wall. When the grille cover is rotated in a second rotation direction, the adaptive section is moved from the narrow groove area into the wide groove area of the corresponding one of the at least one mounting groove, and the at least one shoulder portion is separated from the rear side of the at least one position-limiting wall.

In certain embodiments, the at least one position-limiting wall is divided into an entrance section, an intermediate section, and a sliding section, a first end of the entrance section is adjacent to the wide groove area of the corresponding one of the at least one mounting groove, a second end of the entrance section is connected to a first end of the intermediate section, and a second end of the intermediate section is connected to a first end of the sliding section. The greatest thickness of the intermediate section is greater than the thickness of the sliding section.

In certain embodiments, the thickness of the sliding section is gradually reduced from the first end thereof toward a second end thereof.

In certain embodiments, the greatest thickness of the intermediate section is greater than the thickness of the entrance section.

Certain aspects of the present disclosure are directed to a grille cover having a quick assembly and disassembly mechanism. The grille cover is mountable to the front side of a front cover or a speaker enclosure and provided with at least one assembly post at the rear side of the grille cover. The at least one assembly post is divided into a fixing section, an adaptive section, and an engaging section. A first end of the fixing section is connectable to the rear side of the grille cover, a second end of the fixing section is connected to a first end of the adaptive section, and a second end of the adaptive section is connected to a first end of the engaging section. The engaging section and the adaptive section have different widths at the junction between the engaging section and the adaptive section so that at least one shoulder portion is formed at the engaging section. When the grille cover is mounted on the front cover or the speaker enclosure, the at least one assembly post is inserted into a mounting groove of the front cover or the speaker enclosure. When the grille cover is rotated in a first rotation direction, the at least one shoulder portion abuts the rear side of a position-limiting wall of the mounting groove. When the grille cover is rotated in a second rotation direction, the shoulder portion is separated from the rear side of the position-limiting wall.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The present disclosure will become more fully understood from the following detailed description and accompanying drawings.
FIG. 1 is an exploded view of a speaker structure viewed from the front side according to certain embodiments of the present disclosure.
FIG. 2 is an exploded view of the speaker structure viewed from the rear side according to certain embodiments of the present disclosure.
FIG. 3 is a perspective view of the speaker structure according to certain embodiments of the present disclosure.
FIG. 4A is a front view of a mounting groove according to certain embodiments of the present disclosure.
FIG. 4B is a rear view of the mounting groove according to certain embodiments of the present disclosure.
FIG. 4C is a cross-section view of the mounting groove according to certain embodiments of the present disclosure.
FIG. 5 is a cross-section view of an assembly post according to certain embodiments of the present disclosure.
FIG. 6A is a schematic diagram showing the assembling process during which an assembly post is located at a wide groove area according to certain embodiments of the present disclosure.
FIG. 6B is a schematic diagram showing the assembling process during which the assembly post is moved to a middle section of a narrow groove area according to certain embodiments of the present disclosure.
FIG. 6C is a schematic diagram showing the assembling process during which the assembly post arrives at the position in the narrow groove area that is the farthest away from the wide groove area according to certain embodiments of the present disclosure.
FIG. 7 is a cross-section view showing that an assembly post is located at the narrow groove area according to certain embodiments of the present disclosure.

### DETAILED DESCRIPTION

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the term "and/or" includes any and all combinations of one or more of the associated listed items. Titles or subtitles can be used herein for the convenience of a reader, which shall have no influence on the scope of the present disclosure.

The accompanying drawings are schematic and may not have been drawn to scale. The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, materials, objects, or the like, which are for distinguishing one component/material/object from another one only, and are not intended to, nor should be construed to impose any substantive limitations, or any limitation with respect to assembling or disposing sequence in actual use, on the components, materials, objects, or the like. Directional terms (e.g., "front", "rear", "left", "right", "upper/top" and/or "lower/bottom") are explanatory only and are not intended to be restrictive of the scope of the present disclosure.

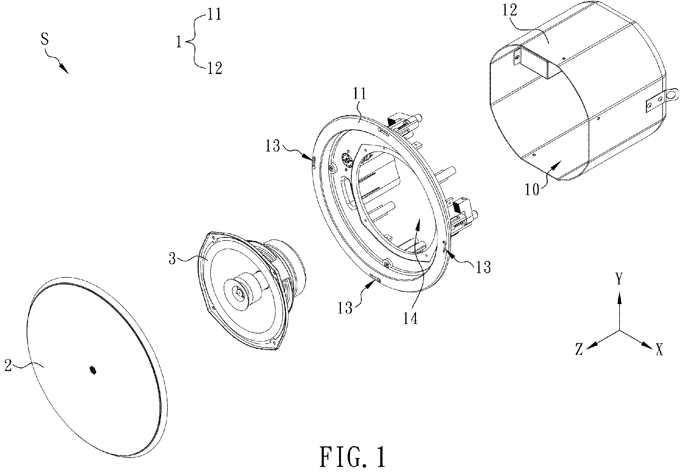

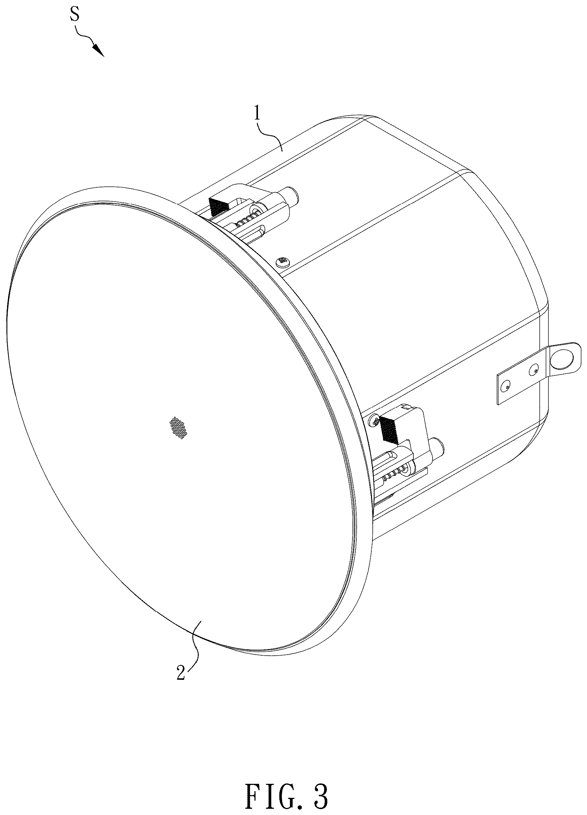

Certain aspects of the present disclosure are directed to a speaker structure with a quick assembly/disassembly mechanism, and a front cover assembly and a grille cover of thereof. Referring to FIG. 1 to FIG. 3, the speaker structure S includes a speaker enclosure 1 and a grille 2, and can be assembled with a speaker driver 3 according to needs, so as to form a complete sound output system, realizing the sound output function. To facilitate description of component features and relative positional relationship, the spatial configuration of the components as used in the present disclosure is defined by three axes that are perpendicular to one another, namely a transverse axis (the X axis), a longitudinal axis (the Y axis), and a depth axis (the Z axis). Generally, unless the context clearly dictates otherwise, the transverse axis (the X axis) refers to the direction extending between the right and left sides, wherein the upper left of FIG. 1 is defined as facing the left side of a component, and the lower right of FIG. 1 as facing the right side of a component; the longitudinal axis (the Y axis) refers to the direction extending between the top and bottom sides, wherein the top (upper) side of FIG. 1 is defined as facing the top side of a component, and the bottom side of FIG. 1 as facing the bottom (lower) side of a component; and the depth axis (the Z axis) refers to the direction extending between the front and rear sides, wherein the lower left of FIG. 1 is defined as facing the front side of a component, and the upper right of FIG. 1 as facing the rear side of a component.

Referring to FIG. 1 to FIG. 3, in certain embodiments, the speaker enclosure 1 includes a front cover 11 and a rear housing 12. The front side of the front cover 11 is provided with a plurality of mounting grooves 13 adjacent to the edge of the front cover 11, and the center of the front side of the front cover 11 is formed with a mounting hole 14 for accommodating the speaker driver 3. The rear housing 12 is configured to be mounted to the rear side of the front cover 11, and the rear housing 12 is formed therein with a reflective chamber 10. The reflective chamber 10 is in communication with the mounting hole 14 and is used to control the reflection and spreading of acoustic waves and optimize the sound effect produced. However, according to the actual or production requirements, the speaker enclosure 1 can have subsequent changes. For example, the locations of the mounting grooves 13 and of the mounting hole 14 may be in any area and are not necessarily adjacent to the edge of the front cover 11 or at the center of the front cover 11, and each of the number of the mounting grooves 13 and the number of the mounting hole 14 can be one or more. In certain embodiments, each of the front cover 11 and the rear housing 12 can be a single element or be composed of multiple elements. In certain embodiments, the speaker enclosure 1 itself is a single element or composed of multiple elements, and is not limited to the afore-referenced configuration of the front cover 11 and the rear housing 12. In certain embodiments, the reflective chamber 10 is in the front cover 11. In certain embodiments, a part of the reflective chamber 10 is in the front cover 11, while the rest of the reflective chamber 10 is in the rear housing 12. That is, it suffices that the reflective chamber 10 is in at least one of the front cover 11 and the rear housing 12 or between the front cover 11 and the rear housing 12.

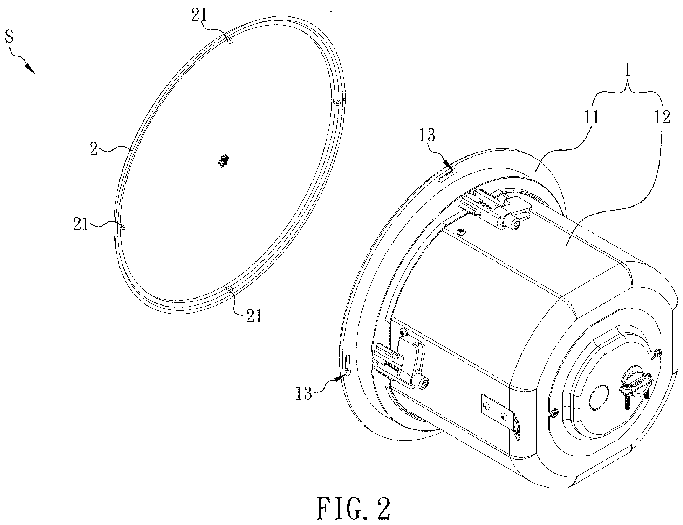

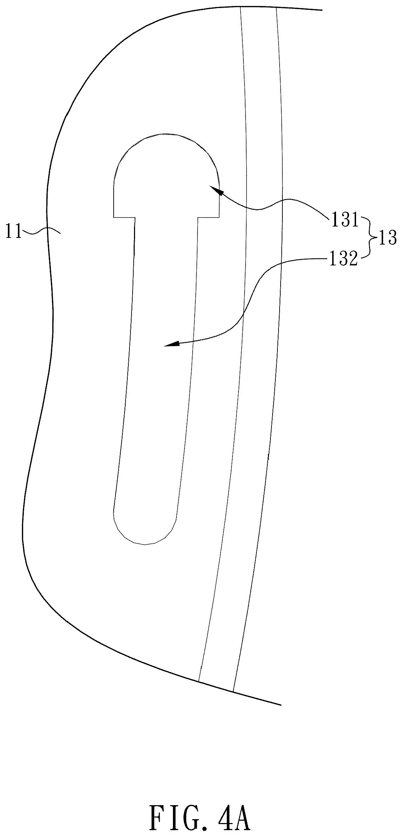

Referring to FIG. 4A in conjunction with FIG. 1 to FIG. 3, each mounting groove 13 when seen in front view can be divided into a wide groove area 131 and a narrow groove area 132, wherein the wide groove area 131 and the narrow groove area 132 are connected to each other along a first axial direction (e.g., the Y-axis direction), and the width of the wide groove area 131 in a second axial direction (e.g., the X-axis direction) is greater than the width of the narrow groove area 132 in the second axial direction. As used herein, the terms "first axial direction" and "second axial direction" serve mainly to define the direction along which the wide groove area 131 and the narrow groove area 132 of the same mounting groove 13 are connected to each other, and as the reference according to which the wide groove area-narrow groove area width difference is determined. Therefore, the first axial direction and the second axial direction of each mounting groove 13 are defined with reference to the structure and location of each mounting groove 13 in question and may be different from the first axial direction and the second axial direction of another mounting groove 13. In addition, the "first axis" and the "second axis" do not constantly correspond to the X axis or the Y axis and may each form a certain angle with the X axis or the Y axis. Further, while the mounting groove 13 is shown as a through structure in FIG. 2, the present disclosure is not limited thereto. In certain embodiments, the rear side of the mounting groove 13 is a closed structure. That is, the rear side of the mounting groove 13 can vary in structure to adapt to different structural design changes.

Referring to FIG. 4A to FIG. 4C, a portion of the groove wall of each mounting groove 13 is protrudingly provided with at least one position-limiting wall 133, wherein the position-limiting wall 133 corresponds to the narrow groove area 132, but not to the wide groove area 131, of the mounting groove 13 such that the narrow groove area 132 and the wide groove area 131 are different in width in the second axial direction. In certain embodiments, the position-limiting wall 133 extends along the groove wall of the narrow groove area 132 as a single unit. However, the present disclosure is not limited thereto. According to product requirements, the number of the position-limiting wall 133 can be one or more, as long as it achieves the blocking effect described *infra.*

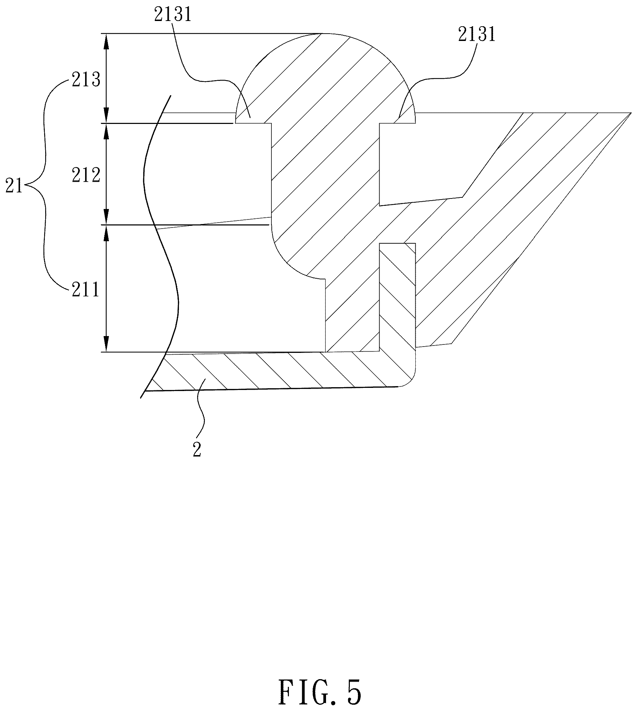

Referring to FIG. 1 to FIG. 3, the grille cover 2 is configured to be mounted on the front side of the front cover 11, thereby covering the speaker driver 3 and providing a protective function. According to product needs, the grille cover 2 may be made of metal, plastic, a composite material, or a number of different materials, such as a metal frame and a plastic grille. The grille cover 2 has a three-dimensional configuration that may be of any shape and that is not limited to the disk-shaped configuration shown in the drawings. In certain embodiments, the rear side of the grille cover 2 is provided with a plurality of assembly posts 21 adjacent to the edge of the grille cover 2. However, the present disclosure is not limited thereto. According to actual product needs, the locations of the assembly posts 21 may be in any area and are not necessarily adjacent to the edge of the grille cover 2, and the number of the assembly post(s) 21 can be one or more, but the number of the assembly post(s) 21 will not exceed the number of the mounting grooves 13. As shown in FIG. 5 to FIG. 6C, each assembly post 21 can be divided into a fixing section 211, an adaptive section 212, and an engaging section 213. The front end of the fixing section 211 can be connected to the rear side of the grille cover 2, the rear end of the fixing section 211 is connected to the front end of the adaptive section 212, and the rear end of the adaptive section 212 is connected to the front end of the engaging section 213. The engaging section 213 and the adaptive section 212 have different widths at their junction, with the width of the engaging section 213 being greater than that of the adaptive section 212 at the junction, so that at least one shoulder portion 2131 is formed at the engaging section 213.

Referring to FIG. 5 in conjunction with FIG. 4A to FIG. 4C, the shoulder portion 2131 of each assembly post 21 is so designed that its greatest width in the second axial direction is less than or equal to the width of the wide groove area 131 of the corresponding mounting groove 13 in the second axial direction, thereby allowing both the engaging section 213 and the adaptive section 212 of the assembly post 21 to extend into the wide groove area 131. In addition, the greatest width of the shoulder portion 2131 of each assembly post 21 in the second axial direction is greater than the width of the narrow groove area 132 of the corresponding mounting groove 13 in the second axial direction so that the shoulder portion 2131 cannot move into the narrow groove area 132. The width of the adaptive section 212 of each assembly post 21 in the second axial direction is less than or equal to the width of the narrow groove area 132 of the corresponding mounting groove 13 in the second axial direction so that the adaptive section 212 can enter the narrow groove area 132 and move in the narrow groove area 132 reciprocatingly along the first axial direction.

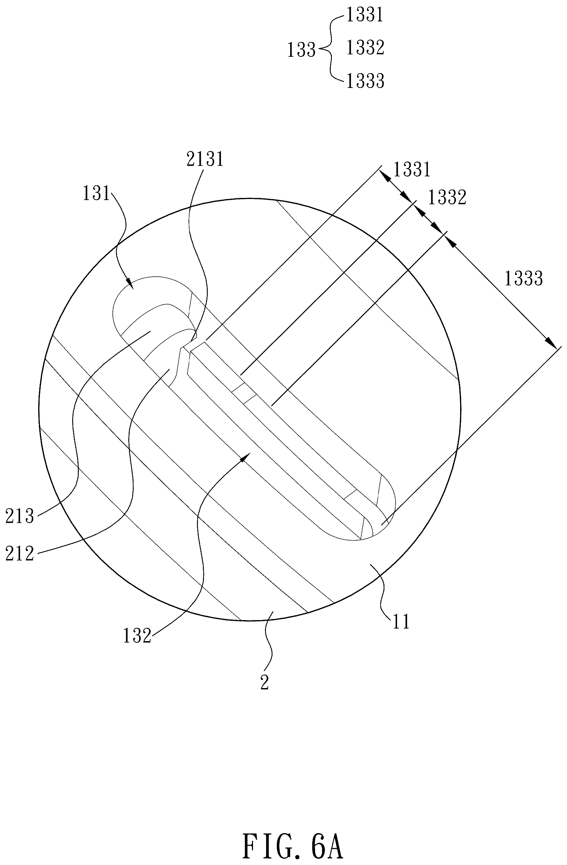

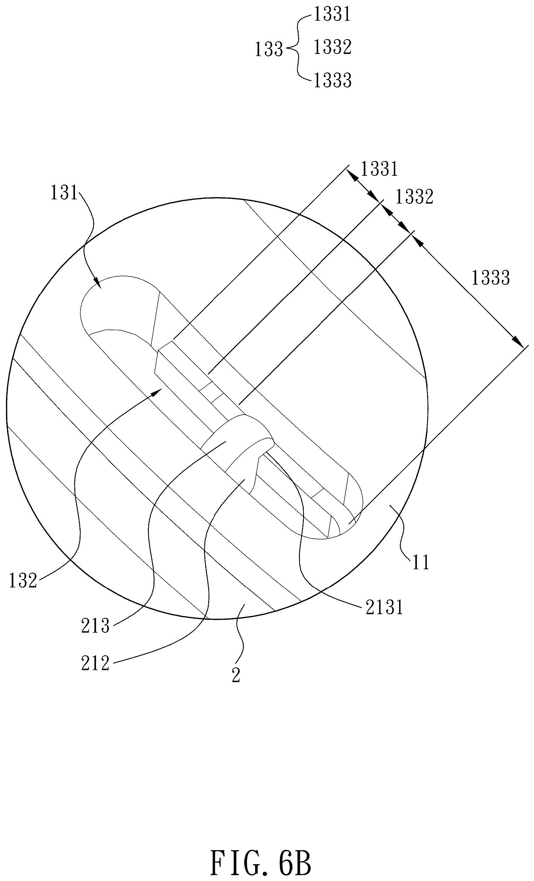

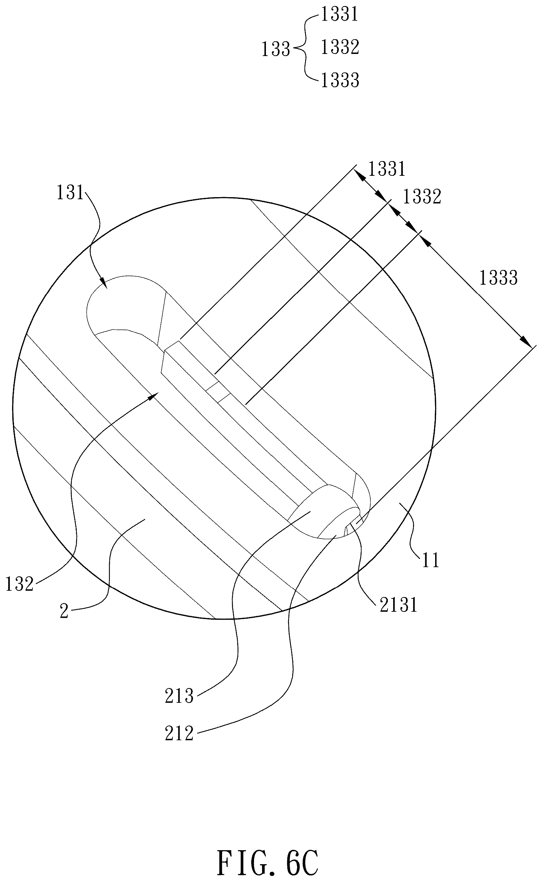

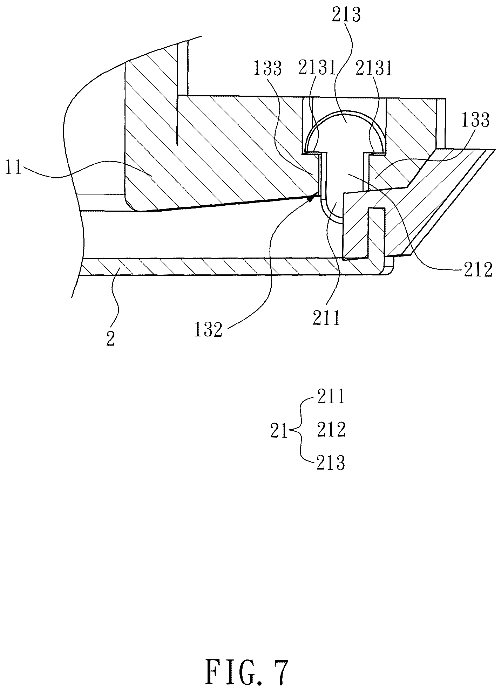

Referring again to FIG. 1 to FIG. 3, the way the grille cover 2 is mounted to the speaker enclosure 1 (or the front cover 11) is described *infra.* First, referring to FIG. 6A, the engaging section 213 of each assembly post 21 is inserted into the wide groove area 131 of the corresponding mounting groove 13 in a front-to-rear direction and moved past the projection area in the first axial direction of the position-limiting wall 133 of the corresponding mounting groove 13 until the adaptive section 212 of the assembly post 21 corresponds to the narrow groove area 132 of the corresponding mounting groove 13. After that, the grille cover 2 can be rotated in a first rotation direction (e.g., clockwise) about the rotation axis of the grilled cover 2, in order to move the adaptive section 212 of each assembly post 21 from the wide groove area 131 into the narrow groove area 132 of the corresponding mounting groove 131 (as shown in FIG. 6B) until the adaptive section 212 arrives at the position in the narrow groove area 132 that is the farthest away from the wide groove area 131 (as shown in FIG. 6C), thereby completing the assembly process of the grille cover 2. Referring to FIG. 7, when the adaptive section 212 of each assembly post 21 enters the narrow groove area 132 of the corresponding mounting groove 13, the shoulder portion 2131 of the engaging section 213 of the assembly post 21 abuts the rear side of the position-limiting wall 133 of the corresponding mounting groove 13 such that the engaging section 213 is blocked by the position-limiting wall 133 from moving forward out of the narrow groove area 132; in consequence, the grille cover 2 is mounted securely on the speaker enclosure 1 (or the front cover 11).

When it is desired to remove the grille cover 2 from the speaker enclosure 1 (or the front cover 11), referring to FIG. 1 to FIG. 3, the grille cover 2 can be rotated about its rotation axis in a second rotation direction (e.g., counterclockwise) to gradually move the adaptive section 212 of each assembly post 21 from the narrow groove area 132 into the wide groove area 131 of the corresponding mounting groove 13, as shown in FIGS. 6C, 6B and 6A. Once the adaptive section 212 of each assembly post 21 is in the wide groove area 131 of the corresponding mounting groove 13, the shoulder portion 2131 of the engaging section 213 of the assembly post 21 is separated from the rear side of the position-limiting wall 133 of the corresponding mounting groove 13; in other words, the shoulder portion 2131 is no longer blocked by the position-limiting wall 133. Each assembly post 21, therefore, can be moved away from the wide groove area 131 of the corresponding mounting groove 13 to allow removal of the grille cover 2 from the speaker enclosure 1 (or the front cover 11).

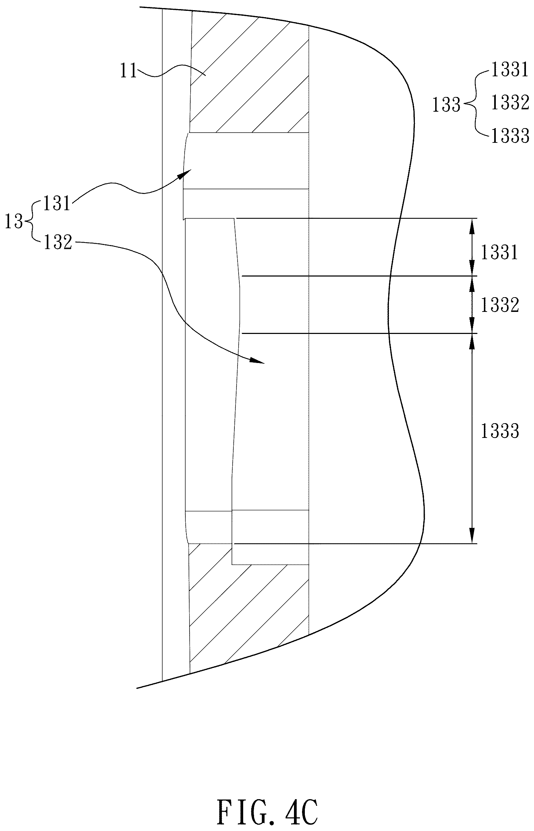

With continued reference to FIG. 1 to FIG. 3, the speaker enclosure 1 and the grille cover 2 may vibrate when the speaker driver 3 plays music. To prevent such vibrations from causing reverse rotation of the grille cover 2 (i.e., rotation in the second rotation direction), which if happening may result in unexpected separation of the grille cover 2, referring to FIG. 4C, in certain embodiments, the position-limiting wall 133 of each mounting groove 13 can be divided into an entrance section 1331, an intermediate section 1332, and a sliding section 1333. The first end of the entrance section 1331 is adjacent to the wide groove area 131, the second end of the entrance section 1331 is connected to the first end of the intermediate section 1332, and the second end of the intermediate section 1332 is connected to the first end of the sliding section 1333. The greatest thickness of the intermediate section 1332 (i.e., the greatest length in the front-to-rear direction) is greater than the thickness of the entrance section 1331 and the thickness of the sliding section 1333, such that an inclined surface is formed at each of the junction between the entrance section 1331 and the intermediate section 1332 and at the junction between the intermediate section 1332 and the sliding section 1333.

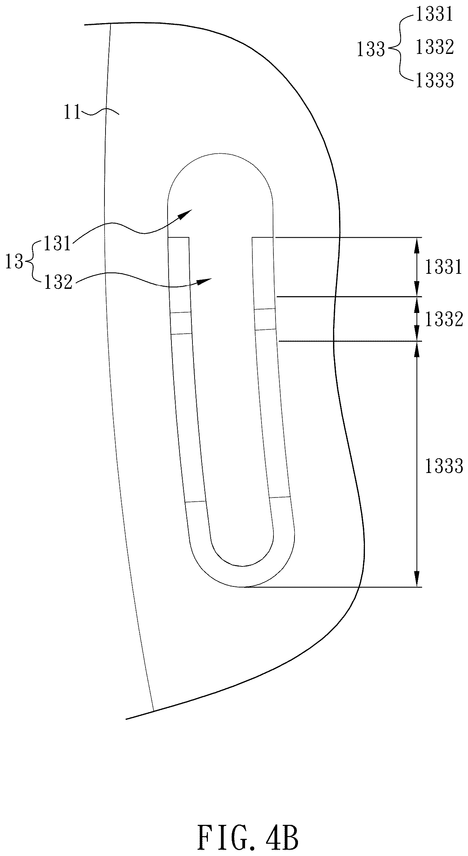

Referring to FIG. 4 to FIG. 7, after the adaptive section 212 of each assembly post 21 enters the portion of the corresponding mounting groove 13 that corresponds to the entrance section 1331 of the position-limiting wall 133 of the corresponding mounting groove 13, the shoulder portion 2131 of the assembly post 21 can be gradually slid to the intermediate section 1332 of the corresponding mounting groove 13 along the inclined surface at the junction between the entrance section 1331 and the intermediate section 1332 and, after moving past the greatest-thickness portion of the intermediate section 1332, be gradually slid to the second end of the sliding section 1333 of the corresponding mounting groove 13 (i.e., the endpoint of the rotating assembly process) along the inclined surface at the junction between the intermediate section 1332 and the sliding section 1333. The assembly post(s) 21 is elastic, so each assembly post 21 can be slightly deformed by, and press tightly against, the convex rear side of the position-limiting wall 133 of the corresponding mounting groove 13 while moving along the position-limiting wall 133. In certain embodiments, the thickness of each sliding section 1333 is gradually reduced from its first end toward its second end, so the endpoint of the rotating assembly process of the grille cover 2 corresponds in position to the thinnest portion of each sliding section 1333, and the risk that the grille cover 2 without forcible rotation by the user may be reversely rotated and fall off because of vibrations is low. However, according to actual product needs, as long as the greatest thickness of the intermediate section 1332 is greater than the thickness of the sliding section 1333, such structure can satisfactorily provide said fall-off prevention effects.

In summary, referring again to FIGS. 1 to 7, through the structural design of the assembly post(s) 21 and the mounting grooves 13, a user can quickly and conveniently assemble the grille cover 2 firmly to the speaker enclosure 1 by simply rotating the grille cover 2 in a first direction without relying on any additional tools; similarly, by rotating the grille cover 2 in a second reverse direction, the user can also easily remove the grille cover 2 from the speaker enclosure 1. This not only improves the convenience and efficiency of use, but also effectively reduces the damage or improper operation that may be caused during assembly or disassembly, thereby significantly improving the user experience and practical value of the product.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its scope.

## Claims

1. A speaker structure having a quick assembly and disassembly mechanism, comprising:
a speaker enclosure (1) having at least one mounting groove (13) at a front side thereof, wherein a portion of a groove wall of the at least one mounting groove (13) is protrudingly provided with at least one position-limiting wall (133) dividing the at least one mounting groove (13) into a wide groove area (131) and a narrow groove area (132), the wide groove area (131) and the narrow groove area (132) are connected to each other along a first axial direction, and a width of the wide groove area (131) in a second axial direction is greater than a width of the narrow groove area (132) in the second axial direction; and
a grille cover (2) mountable on the front side of the speaker enclosure (1)and provided with at least one assembly post (21) at a rear side of the grille cover (2), wherein each of the at least one assembly post (21) is divided into a fixing section (211), an adaptive section (212), and an engaging section (213), a first end of the fixing section (211) is connectable to the rear side of the grille cover (2), a second end of the fixing section (211) is connected to a first end of the adaptive section (212), and a second end of the adaptive section (212) is connected to a first end of the engaging section (213); the engaging section (213) and the adaptive section (212) have different widths at a junction between the engaging section (213) and the adaptive section (212) so that at least one shoulder portion (2131) is formed at the engaging section (213); a greatest width of the at least one shoulder portion (2131) in the second axial direction is less than or equal to a width of the wide groove area (131) of a corresponding one of the at least one mounting groove (13) in the second axial direction, and is greater than a width of the narrow groove area (132) of the corresponding one of the at least one mounting groove (13) in the second axial direction; and a width of the adaptive section (212) in the second axial direction is less than or equal to the width of the narrow groove area (132) of the corresponding one of the at least one mounting groove (13) in the second axial direction so that the adaptive section (212) is movable in the narrow groove area (132),
wherein when the grille cover (2) is mounted on the speaker enclosure (1), the engaging section (213) is inserted into the wide groove area (131) of the corresponding one of the at least one mounting groove (13) and moved past a projection area along the first axial direction of the at least one position-limiting wall (133) of the corresponding one of the at least one mounting groove (13) until the adaptive section (212) corresponds to the narrow groove area (132) of the corresponding one of the at least one mounting groove (13); when the grille cover (2) is rotated in a first rotation direction, the adaptive section (212) is moved from the wide groove area (131) into the narrow groove area (132) of the corresponding one of the at least one mounting groove (13), and the at least one shoulder portion (2131) abuts a rear side of the at least one position-limiting wall (133); and when the grille cover (2) is rotated in a second rotation direction, the adaptive section (212) is moved from the narrow groove area (132) into the wide groove area (131) of the corresponding one of the at least one mounting groove (13), and the at least one shoulder portion (2131) is separated from the rear side of the at least one position-limiting wall (133).

2. The speaker structure according to claim 1, further comprising at least one speaker driver (3), wherein a front side of the speaker enclosure (1) is formed with at least one mounting hole (14), and the at least one speaker driver (3) is mountable in the at least one mounting hole (14).

3. The speaker structure according to claim 1 or 2, wherein the at least one position-limiting wall (133) is divided into an entrance section (1331), an intermediate section (1332), and a sliding section (1333), a first end of the entrance section (1331) is adjacent to the wide groove area (131) of the corresponding one of the at least one mounting groove (13), a second end of the entrance section (1331) is connected to a first end of the intermediate section (1332), and a second end of the intermediate section (1332) is connected to a first end of the sliding section (1333); and a greatest thickness of the intermediate section (1332) is greater than a thickness of the sliding section (1333).

4. The speaker structure according to claim 3, wherein the thickness of the sliding section (1333) is gradually reduced from the first end thereof toward a second end thereof.

5. The speaker structure according to claim 3 or 4, wherein the greatest thickness of the intermediate section (1332) is greater than a thickness of the entrance section (1331).

6. The speaker structure according to any one of claims 1-5, wherein the speaker enclosure (1) comprises:
a front cover (11) provided with the at least one mounting groove (13) at a front side of the front cover (11); and
a rear housing (12) mountable to the front cover (11), wherein a reflective chamber (10) is formed in at least one of the front cover (11) and the rear housing (12) or between the front cover (11) and the rear housing (12).

7. A front cover (11) assembly having a quick assembly and disassembly mechanism, comprising:
a front cover (11) mountable to a rear housing (12) to form a speaker enclosure (1), wherein a front side of the front cover (11) is provided with at least one mounting groove (13), a portion of a groove wall of the at least one mounting groove (13) is protrudingly provided with at least one position-limiting wall (133) dividing the at least one mounting groove (13) into a wide groove area (131) and a narrow groove area (132), the wide groove area (131) and the narrow groove area (132) are connected to each other along a first axial direction, and a width of the wide groove area (131) in a second axial direction is greater than a width of the narrow groove area (132) in the second axial direction; and
a grille cover (2) mountable on the front side of the front cover (11) and provided with at least one assembly post (21) at a rear side of the grille cover (2), wherein each of the at least one assembly post (21) is divided into a fixing section (211), an adaptive section (212), and an engaging section (213), a first end of the fixing section (211) is connectable to the rear side of the grille cover (2), a second end of the fixing section (211) is connected to a first end of the adaptive section (212), and a second end of the adaptive section (212) is connected to a first end of the engaging section (213); the engaging section (213) and the adaptive section (212) have different widths at a junction between the engaging section (213) and the adaptive section (212) so that at least one shoulder portion (2131) is formed at the engaging section (213); a greatest width of the at least one shoulder portion (2131) in the second axial direction is less than or equal to a width of the wide groove area (131) of a corresponding one of the at least one mounting groove (13) in the second axial direction, and is greater than a width of the narrow groove area (132) of the corresponding one of the at least one mounting groove (13) in the second axial direction; and a width of the adaptive section (212) in the second axial direction is less than or equal to the width of the narrow groove area (132) of the corresponding one of the at least one mounting groove (13) in the second axial direction so that the adaptive section (212) is movable in the narrow groove area (132),
wherein when the grille cover (2) is mounted on the front cover (11), the engaging section (213) is inserted into the wide groove area (131) of the corresponding one of the at least one mounting groove (13) and moved past a projection area along the first axial direction of the at least one position-limiting wall (133) of the corresponding one of the at least one mounting groove (13) until the adaptive section (212) corresponds to the narrow groove area (132) of the corresponding one of the at least one mounting groove (13); when the grille cover (2) is rotated in a first rotation direction, the adaptive section (212) is moved from the wide groove area (131) into the narrow groove area (132) of the corresponding one of the at least one mounting groove (13), and the at least one shoulder portion (2131) abuts a rear side of the at least one position-limiting wall (133); and when the grille cover (2) is rotated in a second rotation direction, the adaptive section (212) is moved from the narrow groove area (132) into the wide groove area (131) of the corresponding one of the at least one mounting groove (13), and the at least one shoulder portion (2131) is separated from the rear side of the at least one position-limiting wall (133).

8. The front cover (11) assembly according to claim 7, wherein the at least one position-limiting wall (133) is divided into an entrance section (1331), an intermediate section (1332), and a sliding section (1333), a first end of the entrance section (1331) is adjacent to the wide groove area (131) of the corresponding one of the at least one mounting groove (13), a second end of the entrance section (1331) is connected to a first end of the intermediate section (1332), and a second end of the intermediate section (1332) is connected to a first end of the sliding section (1333); and a greatest thickness of the intermediate section (1332) is greater than a thickness of the sliding section (1333).

9. The front cover assembly according to claim 8, wherein the thickness of the sliding section (1333) is gradually reduced from the first end thereof toward a second end thereof.

10. The front cover assembly according to claim 8 or 9, wherein the greatest thickness of the intermediate section (1332) is greater than a thickness of the entrance section (1331).

11. A grille cover (2) having a quick assembly and disassembly mechanism, mountable to a front side of a front cover (11) or a speaker enclosure (1) and provided with at least one assembly post (21) at a rear side of the grille cover (2), wherein the at least one assembly post (21) is divided into a fixing section (211), an adaptive section (212), and an engaging section (213), a first end of the fixing section (211) is connectable to the rear side of the grille cover (2), a second end of the fixing section (211) is connected to a first end of the adaptive section (212), and a second end of the adaptive section (212) is connected to a first end of the engaging section (213); the engaging section (213) and the adaptive section (212) have different widths at a junction between the engaging section (213) and the adaptive section (212) so that at least one shoulder portion (2131) is formed at the engaging section (213); when the grille cover (2) is mounted on the front cover (11) or the speaker enclosure(1), the at least one assembly post (21) is inserted into a mounting groove (13) of the front cover (11) or the speaker enclosure (1); when the grille cover (2) is rotated in a first rotation direction, the at least one shoulder portion (2131) abuts a rear side of a position-limiting wall (133)of the mounting groove (13); and when the grille cover (2) is rotated in a second rotation direction, the shoulder portion (2131) is separated from the rear side of the position-limiting wall (133).
